(19) Europäisches Patentamt
European Patent Office
Office européen des brevets

(11) **EP 1 935 758 A2**

(12) **EUROPEAN PATENT APPLICATION**

(43) Date of publication:
**25.06.2008 Bulletin 2008/26**

(51) Int Cl.:
**B62D 6/04** *(2006.01)*

(21) Application number: **07024546.9**

(22) Date of filing: **18.12.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **18.12.2006 JP 2006339788**

(71) Applicant: **NSK Ltd.
Tokyo 141-8560 (JP)**

(72) Inventors:
• **Okazaki, Hideaki
  Maebashi-shi
  Gunma 371-8527 (JP)**
• **Endo, Shuji
  Maebashi-shi
  Gunma 371-8527 (JP)**

(74) Representative: **Grünecker, Kinkeldey,
Stockmair & Schwanhäusser
Anwaltssozietät
Leopoldstrasse 4
80802 München (DE)**

(54) **Electric power steering apparatus**

(57) An electric power steering apparatus is provided with a means for correcting a motor assist so as to inhibit a quick steering, when a foreseeable roll amount based on a difference between a first SAT (self-aligning torque) value ($T_{SAT1}$) which does not include a rolling motion of a vehicle and a second SAT value ($T_{SAT2}$) which includes the rolling motion of the vehicle is larger than a predetermined value.

## FIG. 3

EP 1 935 758 A2

**Description**

This application claims foreign priority from Japanese Patent Application No. 2006-339788 filed on December 18, 2006, the entire contents of which are hereby incorporated by reference.

**BACKGROUND OF THE INVENTION**

<FIELD OF THE INVENTION>

The present invention relates to an electric power steering apparatus for imparting a steering assist force by a motor to a steering system of a vehicle, and more particularly to an electric power steering apparatus including an anti-rollover control function.

<RELATED ART>

In an electric power steering apparatus in which a vehicle steering system is assisted with an assist load by employing a rotational force of an electric motor, a drive force of the motor is transmitted to a steering shaft or a rack shaft by a transmission mechanism such as gears or a belt via a speed reduction gear to assist a driver in steering a vehicle. In the conventional electric power steering apparatus, a feedback control is carried out on a motor current in order to generate an assist torque (a steering assist effort) accurately. The feedback control is such that an applied voltage is adjusted so that a difference between a current command value and a motor current detection value becomes small, and an adjustment of the applied voltage is generally implemented by adjusting a duty ratio in a PWM (Pulse Width Modulation) control.

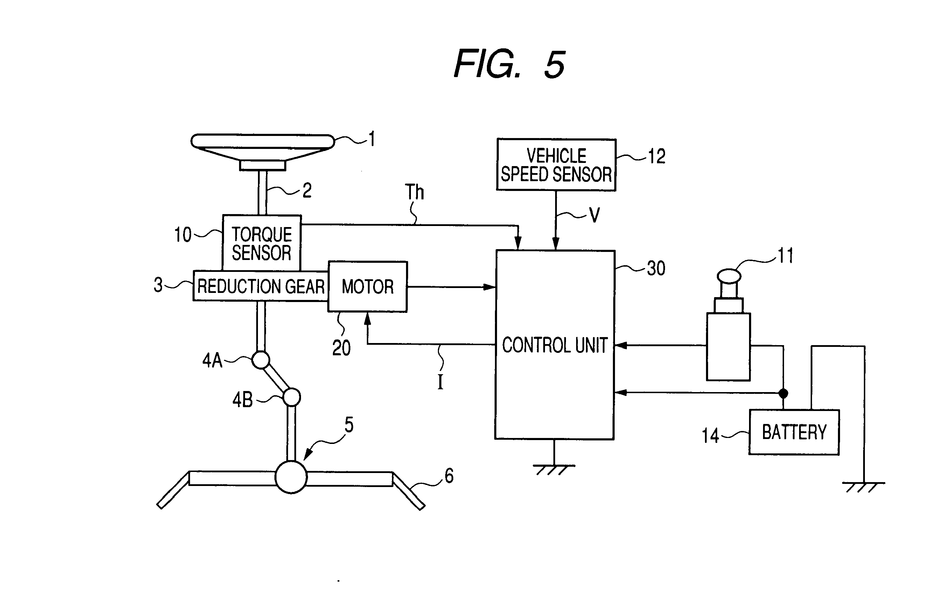

Here, the configuration of a general electric power steering apparatus will be described by reference to Fig. 5. A column shaft 2 of a steering wheel 1 is coupled to tie rods 6 of steered road wheels via a speed reduction gear 3, universal joints 4A and 4B and a rack-and-pinion mechanism 5. A torque sensor 10 for detecting a steering torque exerted on the steering wheel 1 is provided on the column shaft 2, and a motor 20 which assists with steering effort exerted to the steering wheel 1 is coupled to the column shaft 2 via the speed reduction gear 3. Electric power is supplied from a battery 14 to a control unit 30 which controls the power steering apparatus, and an ignition signal is input into the control unit 30 from an ignition key 11, whereby the control unit 30 operates a steering assist command value I of an assist command using an assist map or the like based on a steering torque value Th detected by the torque sensor 10 and a vehicle speed detected by a vehicle speed sensor 12 and controls current that is supplied to the motor 20 based on the steering assist command value I so operated.

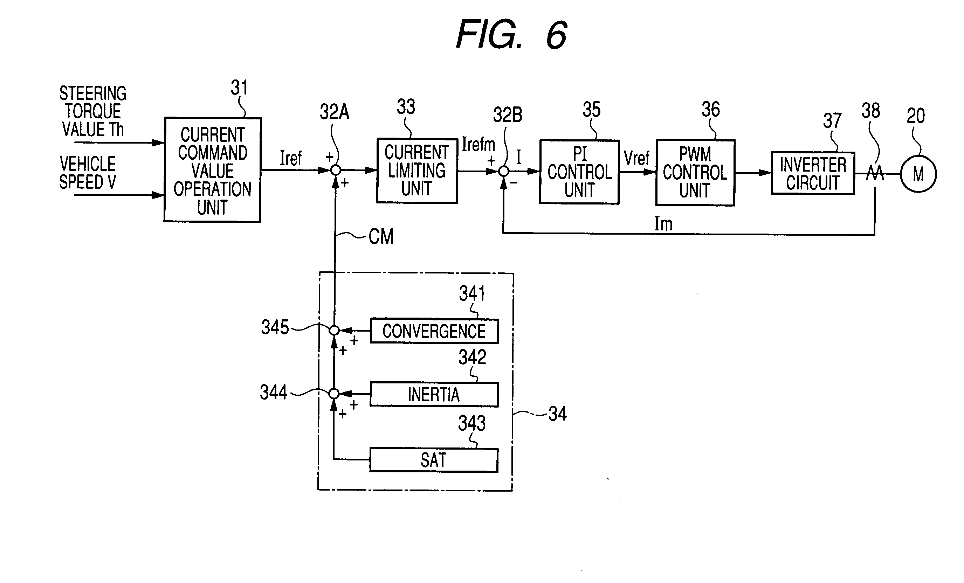

The control unit 30 is made up mainly of a CPU (which includes an MPU (Micro Processor Unit) and an MCU (Micro Controller Unit) as well), and Fig. 6 shows general functions that are executed by programs in the interior of the CPU.

The function and operation of the control unit 30 will be described by reference to Fig. 6. A steering torque value Th that is detected by the torque sensor 10 and a vehicle speed V that is detected by the vehicle speed sensor 12 are input into a current command value operation unit 31 for operating a current command value Iref. The current command value operation unit 31 determines a current command value Iref which constitutes a control target value of a current that is supplied to the motor 20 using the assist map or the like based on the steering torque value Th and the vehicle speed V which have been input thereinto. The current command value Iref is input into a current limiting unit 33 via an adder unit 32A, and a current command value Irefm in which a maximum current is limited is input into a subtracter unit 32B, where a deviation I (Irefm - Im) from a motor current value Im which has been fed back thereto is operated as a steering assist command value, and the deviation so operated is then input into a PI controller unit 35 which improves the properties of the steering operation. A voltage command value Vref, whose properties have been improved in the PI controller unit 35, is input into a PWM controller unit 36, and the motor 20 is then PWM driven via an inverter 37 which functions as a drive unit. The current value Im of the motor 20 is detected by a motor current detector 38 and is then fed back to the subtracter unit 32B. In the inverter 37, an FET is used as a drive element and the inverter 37 is made up of a bridge circuit of FETs.

In addition, a compensation signal CM is added to the adder unit 32A from a compensation unit 34, so that a system is compensated for by the addition of the compensation signal CM, so as to improve the convergence, inertial properties and the like of the system. The compensation unit 34 adds a self-aligning torque (SAT) 343 and an inertia 342 in an adder module 344 and adds further a convergence 341 to the result of the addition in an adder module 345, so as to make the result of the addition in the adder module 344 be a compensation signal CM.

In the general electric power steering that has been described above, when the driver quickly steers, an excessive yaw rate (a lateral acceleration) is generated, and as a result, a large roll angle is give to the vehicle. The roll angle produces a force which compresses a spring of a suspension, and when the driver steers the vehicle in an opposite direction to the initial steering direction, energy stored in the spring is released at one time, thereby calling for a rollover (a lateral overturning) of the vehicle.

Although more and more vehicles are produced to be delivered to the marketplaces which install a function to prevent such a rollover by means of a vehicle stabilization control (including the VDC, Vehicle Dynamics Control (Registered Trademark) , ESP, Electronic Stability Program (Registered Trademark), VSC, Vehicle Stability Control (Registered Trademark) and the like) which utilizes the brakes for controlling to suppress the occurrence of a rollover, the control based on the brakes inherently causes a delay in reaction to a vehicle motion, and in many cases, the drivers have strange feeling from the brake-based control due to the sensation of the human being, leading to a risk that the marketability of those vehicles is damaged.

JP-A-2004-009812 discloses a control system for suppressing a rollover. In the system of JP-A-2004-009812, when a controller estimates a tendency of lateral overturning or rollover of the vehicle from a roll angle and determines that the vehicle is likely to overturn laterally, a steering effort is made to be applied to steered road wheels in a direction in which the likely lateral overturn is suppressed by an electric power steering apparatus, whereby the yaw rate is quickly decreased so as to suppress the rollover.

In addition, although a vehicle motion control unit disclosed in JP-A-2004-203084 also controls a suppression of a rollover, this is done based on what is detected by a rollover detection means which is provided separately.

In the system of JP-A-2004-009812, since the rollover suppression control is carried out based on a roll angle which is generated as a result of the generation of yaw, the control is felt unnatural as felt when controlled by means of the vehicle stabilization control, and the effect of preventing the occurrence of a rollover is small. In addition, in the system disclosed in JP-A-2004-203084, although the control of the steering properties is carried out by employing the various control units so as to realize the rollover preventiveness, this is done by determining a target steering angle. In addition, in either of the systems described in JP-A-2004-009812 and JP-A-2004-203084, the control of rollover is controlled by the rollover detection means.

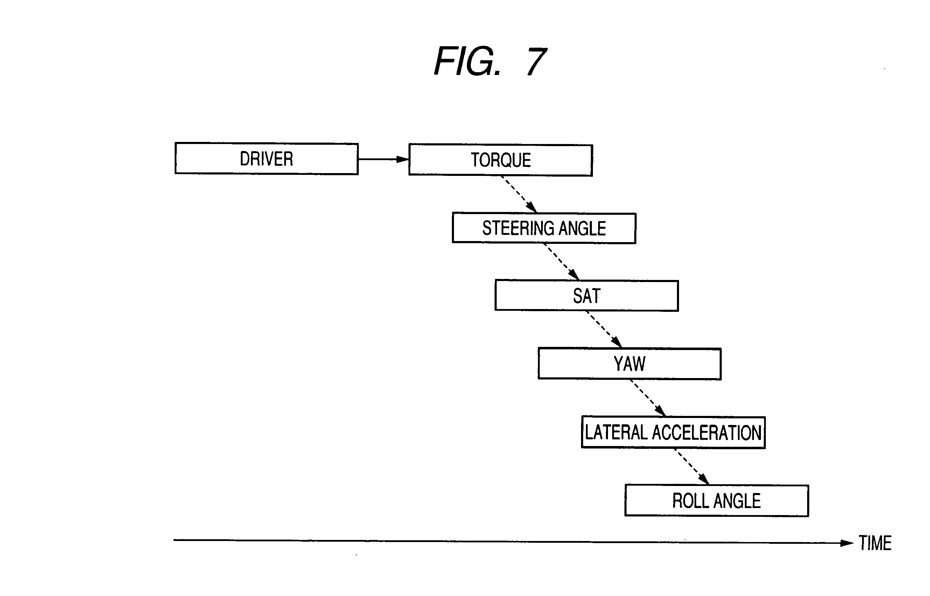

Here, considering the sequence of vehicle motions in order of time or occurrence, as is shown in Fig. 7, when the driver steers the vehicle, the steering operation by the driver first appears in torque and thereafter in steering angle, SAT, yaw, lateral acceleration and roll angle sequentially in that order with a certain delay caused every time the steering operation so appears. Namely, as to the motion of the vehicle, when the driver inputs a steering angle as his or her intention to steer the vehicle, a cornering power is generated in the tires, and yaw and then roll, which are motions of the vehicle, are generated by the action of the cornering power so generated. At the same time as it is generated, the cornering power generates a moment which works round the king pin of the suspension, that is, an SAT, and the moment or SAT so generated acts as a reaction force to the driver. This occurs at an earlier timing at which yaw is generated. Since the control target of the electric power steering apparatus is torque, when the detection of a rollover is implemented based on the roll angle or roll angular velocity, the result has to include a large delay, causing a problem that a control with high probability becomes impossible.

In addition,when compared with generalpassenger vehicles, vehicles like SUVs (Sports Utility Vehicles) are tall in height and tend to have a higher center of gravity. Therefore, the vehicles like SUVs are characterized by the lower rollover preventiveness, resulting in a tendency that a rollover is easier to happen on SUVs than on passenger vehicles. In particular, since the number of SUVs on the road has been increasing in recent years, the number of accidents which involve rollovers of SUVs has also been increasing, and therefore, a control has been in strong demand in which no rollover is caused even in a J turn or a fish-hook turn.

Furthermore, in JP-A-2000-095132, although a yaw rate differential value is estimated, so as to impart damping to yaw rate, it has nothing to do with the control of the rollover preventiveness.

In addi-tion, when a change in a yaw rate signal or the like is used as a condition for determination of a rollover, a means for detecting a yaw rate signal is necessary. Accordingly, the electric power steering apparatus should include a yaw rate sensor, or a yaw rate estimation circuit or a similar yaw rate sensor should be provided outside of the power steering apparatus.

## SUMMARY OF THE INVENTION

One or more embodiments of the invention provide a high-performance electric power steering apparatus including a function having rollover preventiveness to foresee a rollover by utilizing an SAT signal which is normally possessed by the electric power steering apparatus and to inhibit a quick steering by the driver, so as to prevent the occurrence of a rollover.

In accordance with one or more embodiments of the invention, an electric power steering apparatus is provided with a means for correcting a motor assist so as to inhibit a quick steering, when a foreseeable roll amount based on a difference between a first SAT (self-aligning torque) value which does not include a rolling motion of a vehicle and a second SAT value which includes the rolling motion of the vehicle is larger than a predetermined value.

In the electric power steering apparatus, the foreseeable roll amount may be determined by a sum of the difference between the first SAT value and the second SAT value and a value resulting from multiplying a differential value of the difference by a coefficient.

In the electric power steering apparatus, when the foreseeable roll amount is larger than the predetermined value, a signal in which a signal resulting from multiplying a vehicle speed by a gain is restricted by a limiter may be subtracted from a current command value or a steering assist command value.

Moreover, in accordance with one or more embodiments of the invention, an electric power steering apparatus is provided with: a current command value operating unit that operates a current command value based on a steering torque and a vehicle speed; a motor drive control unit that controls a motor for giving a steering assist to a steering mechanism based on the current command value; and an anti-rollover control unit that operates a foreseeable roll amount based on the steering torque value, the vehicle speed, a motor current of the motor, and a rotational angle of the motor, and corrects the motor assist by outputting an anti-rollover control signal when the foreseeable roll amount is larger than a predetermined value.

In the electric power steering apparatus, the anti-rollover control unit may include: an SAT operation module that operates a first SAT value which does not include a rolling motion of a vehicle based on the vehicle speed and the rotational angle; an SAT detection module that operates a second SAT value which includes the rolling motion of the vehicle based on the steering torque value, the motor current, and an angular velocity of the motor; a subtraction module that obtains a difference between the first SAT value and the second SAT value; a foreseeable roll amount operation module that operates the foreseeable roll amount from the difference; a rollover determination module that outputs a switching signal when determining that the foreseeable roll amount is larger than the predetermined value; a gain/limiter module that obtains a correcting vehicle speed based on the vehicle speed; and a switching module that switches the correcting vehicle speed to a fixed value by the switching signal so as to be outputted as the anti-rollover control signal.

In the electric power steering apparatus, the foreseeable roll amount operation module may include: a means for differentiating the difference and multiplying the result of the differentiation by a coefficient; and a means for adding a value resulting from the multiplication and the difference together.

In the electric power steering apparatus, the rollover determination module may output the switching signal when the foreseeable roll amount is larger than the predetermined value.

In the electric power steering apparatus, the switching module may outputs the correcting vehicle speed when the switching signal is input thereinto.

According to the electric power steering apparatus of the embodiments of the invention, since the SATs are detected or operated based on the torque or the motor torque without providing a special sensor, the anti-rollover control can be realized with the simple configuration. In addition, since the anti-rollover control is the foreseeable suppression control, the earlier conditions for occurrence of a rollover can be determined, the more effectively the occurrence of a rollover can be prevented. In the embodiments of the invention, since a rollover is made to be foreseen based on the SATs which appear earlier in time than yaw in the motion of a vehicle, an effective control can be enabled.

Other aspects and advantages of the invention will be apparent from the following description and the appended claims.

## BRIEF DESCRIPTION OF THE DRAWINGS

Fig. 1 is a diagram which explains a principle of the invention.

Fig. 2 is a diagram which explains the principle of the invention.

Fig. 3 is a block diagram showing a configuration of an embodiment of the invention.

Fig. 4 is a flowchart illustrating an operation example of the invention.

Fig. 5 is a diagram showing a configuration example of a general electric power steering apparatus.

Fig. 6 is a block diagram showing an example of a control unit.

Fig. 7 is a diagram which explains vehicle motions.

## DETAILED DESCRIPTION OF THE EXEMPLARY EMBODIMENTS

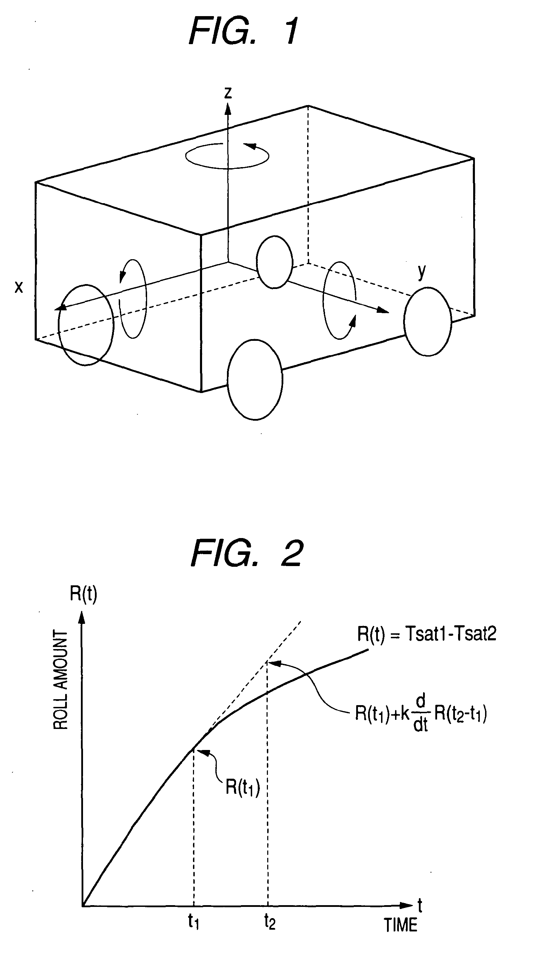

Fig. 1 is a diagram which explains kinetic dynamics (XYZ axes) of a vehicle. When a driver steers the vehicle, according to its own kinetic dynamics, the vehicle performs as indicated by arrows in the figure a lateral motion (in a Y axis direction), a yawing motion round a vertical axis (a moment round the Z axis) and a rolling motion (a moment round the X axis) associated with the yawing motion. In these vehicle motions, a delay of the yawing motion in reaction to an torque input by the driver is smaller than a delay of the rolling motion. Moreover, a delay of an SAT is further smaller than the delay of the yawing motion. That is, the SAT appears slightly earlier than the yawing motion, in the embodiments of the invention, a rollover is foreseen based on the SAT. Since an anti-rollover control is a foreseeable suppression control, an earlier conditions for occurrence of a rollover can be detected, the more effectively an occurrence of a rollover can be prevented. Namely, a rollover can be suppressed earlier than by a rollover determination method which is used in the VSC or the like and more effectively than when the yaw rate is used for rollover determination.

In general, the vehicle motions is represented by a two-wheel model on a premise that no rolling motion is included, and an SAT which moves round a tire king pin is obtained from a tire slip angle which is obtained therefrom. Namely, the two-wheel model of vehicle motions can be expressed by the following equation 1.

[Equation 1]

$$\begin{bmatrix} mVs + 2(K_f + K_r) & mV + \dfrac{2}{V}(l_f K_f - l_r K_r) \\ 2(l_f K_f - l_r K_r) & Is + \dfrac{2}{V}(l_f^2 K_f + l_r^2 K_r) \end{bmatrix} \begin{bmatrix} \beta(s) \\ \gamma(s) \end{bmatrix} = \begin{bmatrix} 2K_f \delta(s) \\ 2l_f K_f \delta(s) \end{bmatrix}$$

A slip angle $\beta$ is obtained from the above equation 1, and an SAT value $T_{SAT1}$ (a first SAT value) which does not include a steering characteristic characterized by rolling is obtained by the following equation 2.

[Equation 2]

$$T_{SAT1} = 2\xi K_f (\beta + \frac{l_f}{V}\gamma - \delta)$$

The SAT value $T_{SAT1}$ that is obtained by the above equation 2 is a value which takes no rolling motion at all into consideration.

Next, in a motion system of the electric power steering apparatus, from a condition that a value which adds up a detectable manual input torque that is input by the driver, that is, a steering torque value Th, an assist torque Tm which is generated by the motor, and a mechanical friction $T_{frc}$ which is determined by design is always balanced with the SAT, an SAT value $T_{SAT2}$ (a second SAT value) which includes a steering characteristic characterized by rolling is obtained by the following equation 3.

[Equation 3]

$$T_{SAT2} = T_h + T_m + T_{frc}$$

The SAT value $T_{SAT2}$ that is obtained by Equation 3 is a value which includes a rolling motion. A difference between the two SAT values $T_{SAT1}$ and $T_{SAT2}$ that are obtained by Equation 2 and Equation 3, respectively, is a difference which does not include any rolling motion, and a roll amount R(t) which is obtained from a difference between SAT values $T_{SAT1}$ and $T_{SAT2}$ at a time t is obtained by the following equation 4.

[Equation 4]

$$R(t) = T_{SAT1} - T_{SAT2}$$

The roll amount R(t) has characteristics indicated by solid lines in Fig. 1, and letting a rollover threshold value (a predetermined value) be Rs, when the following equation 5 is established, it is determined that a rollover results. Note that k is a coefficient.

[Equation 5]

$$R(t_1) + k\frac{d}{dt}R(t_2 - t_1) > R_s$$

A left-hand member of Equation 5 is such as to provide a control mode in which how the roll amount develops at a time $t_2$ is predicted from the inclination of a tangent at a time $t_1$ in Fig. 2, so as to decrease the roll amount R(t), and the roll amount then takes a characteristic indicated by broken lines in Fig. 1. In the following description, the left-side member of Equation 5, that is, the broken-line characteristic in Fig. 1 is regarded as a "foreseeable roll amount f(R(t))." The foreseeable roll amount f(R(t)) becomes a future roll amount transition which is predicted based on the inclination of the tangent at the time t1 and becomes a locus of a future SAT value which includes the roll amount R(t) as is indicated by the broken lines in Fig. 1.

Consequently, when the foreseeable roll amount f(R(t)) becomes larger the rollover threshold value Rs and Equation 5 is established, determining that a rollover has been reached, the rollover can be prevented by outputting a current command value (or a steering assist command value) to prohibit the driver to perform any further a quick steer which results in a rollover, that is, reducing the current command value (or the steering assist command value).

Hereinafter, an example of the invention will be described by reference to the drawings.

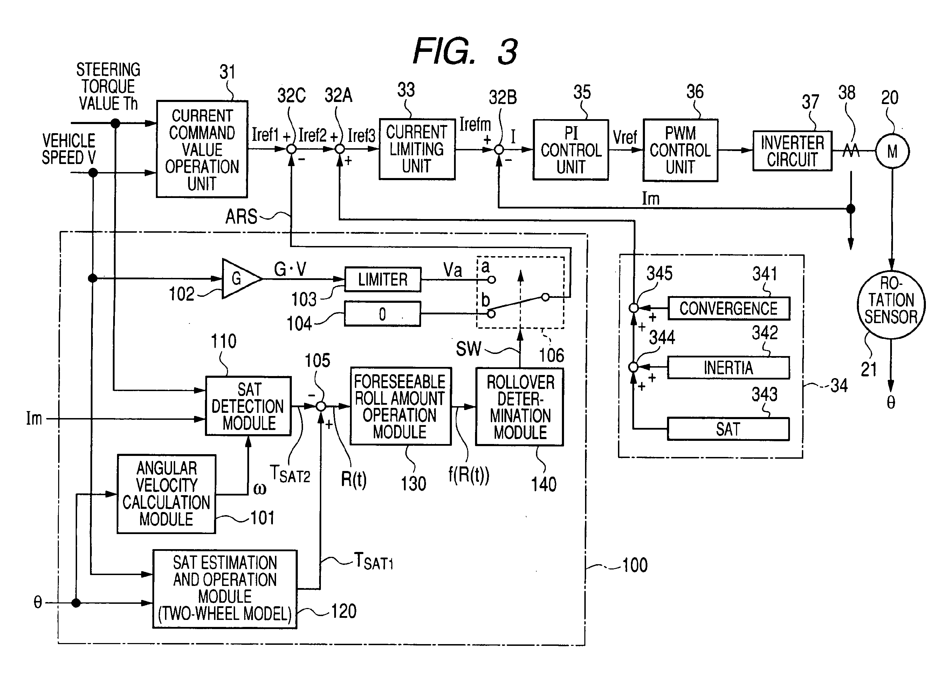

Fig. 3 shows a configuration example of the embodiment of the invention in association with Fig. 5, and an anti-rollover control unit 100 is provided, and an anti-rollover control signal ARS which is calculated in the anti-rollover control unit is made to be subtracted from a current command value Iref1 in a subtracter unit 32C for correction.

In addition, a rotation sensor 21 (for example, a resolver) for detecting a rotational angle θ of a motor 20 is mounted, and a rotational angle θ so detected is input not only into an SAT operation module (a two-wheel model) 120 but also into an angular velocity calculation module 101, an angular velocity ω that is calculated in the angular velocity calculation module 101 being then input in an SAT detectionmodule 110. Furthermore, a steering torque value Th and a motor current Im are input into the SAT detection module 110, and a vehicle speed V is input into the SAT operation module 120. The SAT detection module 110 detects an SAT value $T_{SAT2}$ which includes the steering characteristic characterized by rolling to input it into a subtracter module 105 for subtraction, while the SAT operation module 120 operates an SAT value $T_{SAT1}$ which does not include the steering characteristic characterized by rolling to input it into the subtracter module 105 for addition.

The vehicle speed V is input into a gain module 102 which imparts a damping gain of the steering apparatus, and a vehicle speed G·V to which a gain G is imparted is input into a contact "a" of a switching module 106 as a correcting vehicle speed Va by way of a limiter 103 where its upper limit value is limited. In addition, a signal of "0" is input into a contact "b" of the switching module 106 from a value fixing module 104, and the contacts "a", "b" are switched by a switching signal SW. Note that when no switching signal is input, the contact is connected to the "b" and a fixed value of "0" is outputted as the anti-rollover control signal ARS.

On the other hand, a roll amount R (t) (= $T_{SAT1}$ - $T_{SAT2}$) that is obtained in a subtracter module 105 is input into a foreseeable roll amount operation module 130, so as to obtain a foreseeable roll amount f(R(t)) which corresponds to the left-hand member of Equation 5. A rollover determination module 140 determines whether or not the foreseeable roll amount f (R (t)) has increased to be larger than the rollover threshold value Rs based on Equation 5 above and outputs a switching signal SW to switch the contacts of the switching module 106 when Equation 5 is determined to have been established. Then, an output of the switching module 106 whose contacts have been switched by the switching signal SW is input into the subtracter unit 32C for subtraction as the anti-rollover control signal ARS.

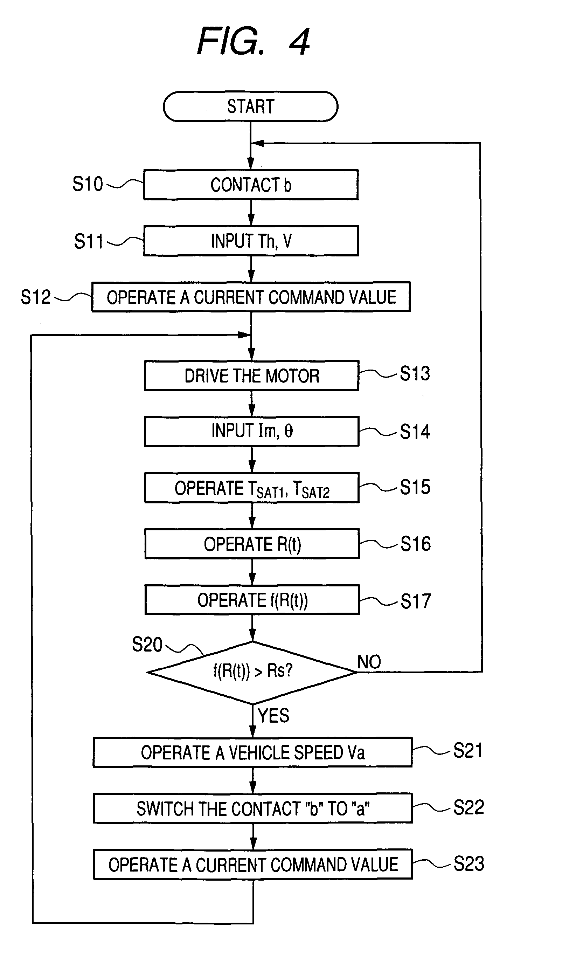

An operation example of the electric power steering apparatus that is configured as has been described above will be described by reference to a flowchart shown in Fig. 4.

Firstly, when the operation starts, the contacts of the switching module 106 is switched to the contact "b" by the switching signal SW (step S10), and the signal of "0" in the value fixing module 104 is input into the subtracter module 32C for subtraction as the anti-rollover signal ARS by way of the switching module 106. Namely, no correction is made to the current command value Iref1, whereby a motor drive control similar to that shown in Fig. 6 is executed. Namely, the steering torque value Th and the vehicle speed V are input into the current command value operation unit 31, respectively, from the torque sensor and the vehicle speed sensor (step S11), the current command value operation unit 31 operates a current command value Iref1 based on the steering torque value Th and the vehicle speed V (step S12), and the current command value Iref1 so operated is delivered to the motor 20 by way of a PI control unit 35, a PWM control unit 36, and an inverter circuit 37 so as to drive the motor 20 (step S13).

Then, a motor current Im detected by a current detector 38 and the rotational angle θ detected by the rotation sensor 21 are input into the anti-rollover control unit 100 (step S14), whereby the SAT operation module 120 operates an SAT value $T_{SAT1}$ according to Equation 2 above, and the SAT detection module 110 detects an SAT value $T_{SAT2}$ according to Equation 3 above (step S15). Note that the operation sequence of the SAT value $T_{SAT1}$ and SAT value $T_{SAT2}$ is arbitrary. The subtracter module 105 obtains a Roll amount R(t) = $T_{SAT1}$ - $T_{SAT2}$ according to Equation 4 and inputs the Roll amount R(t) so obtained into the foreseeable roll amount operation module 130 (step S16). The foreseeable roll amount operation module 130 operates a foreseeable roll amount f(R(t)) which corresponds to the left-hand member of Equation 5 based on the roll amount R(t) (step S17). The rollover determination module 140 determines whether or not the foreseeable roll amount f (R (t)) so operated is larger than the rollover threshold value Rs (step S20), and if the foreseeable roll amount f(R(t)) is equal to or smaller than the rollover threshold value Rs, the operation flow returns to step S10 in order to repeat the operations described above.

In addition, in at step S20, if the foreseeable roll amount f (R (t)) is determined to be larger than the rollover threshold value Rs, the rollover determination module 140 outputs a switching signal SW. By this or in parallel to the operation above, the vehicle speed V is input into the gain module 102and the correcting vehicle speed Va is input into the contact "a" of the switching module 106 by way of the limiter 103 (step S21). Thereafter, the contacts of the switching module 106 is switched from the "b" to the "a" (step S22), whereby the correcting vehicle speed Va is input into the subtracter unit 32C for subtraction as the anti-rollover control signal ARS, so as to obtain a current command value Iref2 which has been corrected in the subtracter unit 32C, and the operation flow returns to step S13 (step S23).

Note that the contacts of the switching module 106 may be switched to the "b" after the steering torque value Th and the vehicle speed V have been input, and the fixed value of the value fixing module 104 may not be "0."

It will be apparent to those skilled in the art that various modifications and variations can be made to the described exemplary embodiments of the present invention and examples thereof without departing from the spirit or scope of the invention. Thus, it is intended that the present invention cover all modifications and variations of this invention consistent with the scope of the appended claims and their equivalents.

[Description of Reference Numerals]

1 steering wheel; 2 column shaft; 3 reduction gear; 10 torque sensor; 11 ignition key; 12 vehicle speed sensor; 14 battery; 20 motor; 21 rotation sensor; 30 control unit; 31 current command value operation unit; 33 current limiting unit; 34 compensation unit; 35 PI control unit; 36 PWM control unit; 37 inverter circuit; 100 anti-rollover control unit; 101 angular velocity calculation module; 102 gain module; 103 limiter module; 104 value fixing module; 105 subtraction module; 106 switching module; 110 SAT detection module; 120 SAT estimation and operation module (two-wheel model) ; 130 foreseeable roll amount operation module; 140 rollover determination module.

**Claims**

1.  An electric power steering apparatus comprising:

    a mechanism for correcting a motor assist so as to inhibit a quick steering, when a foreseeable roll amount based on a difference between a first SAT (self-aligning torque) value which does not include a rolling motion of a vehicle and a second SAT value which includes the rolling motion of the vehicle is larger than a predetermined value.

2.  The electric power steering apparatus according to Claim 1, wherein the foreseeable roll amount is determined by a sum of the difference between the first SAT value and the second SAT value and a value resulting from multiplying a differential value of the difference by a coefficient.

3.  The electric power steering apparatus according to Claim 1, when the foreseeable roll amount is larger than the predetermined value, a signal in which a signal resulting from multiplying a vehicle speed by a gain is restricted by a limiter is subtracted from a current command value or a steering assist command value.

4.  An electric power steering apparatus comprising:

    a current command value operating unit that operates a current command value based on a steering torque and a vehicle speed;
    a motor drive control unit that controls a motor for giving a steering assist to a steering mechanism based on the current command value; and
an anti-rollover control unit that operates a foreseeable roll amount based on the steering torque value, the vehicle speed, a motor current of the motor, and a rotational angle of the motor, and corrects the motor assist by outputting an anti-rollover control signal when the foreseeable roll amount is larger than a predetermined value.

5. The electric power steering apparatus according to Claim 4, wherein the anti-rollover control unit includes:

an SAT operation module that operates a first SAT value which does not include a rolling motion of a vehicle based on the vehicle speed and the rotational angle;
an SAT detection module that operates a second SAT value which includes the rolling motion of the vehicle based on the steering torque value, the motor current, and an angular velocity of the motor;
a subtraction module that obtains a difference between the first SAT value and the second SAT value;
a foreseeable roll amount operation module that operates the foreseeable roll amount from the difference;
a rollover determination module that outputs a switching signal when determining that the foreseeable roll amount is larger than the predetermined value;
a gain/limiter module that obtains a correcting vehicle speed based on the vehicle speed; and
a switching module that switches the correcting vehicle speed to a fixed value by the switching signal so as to be outputted as the anti-rollover control signal.

6. The electric power steering apparatus according to Claim 5, wherein the foreseeable roll amount operation module includes:

a module for differentiating the difference and multiplying the result of the differentiation by a coefficient; and
a module for adding a value resulting from the multiplication and the difference together.

7. The electric power steering apparatus according to Claim 5, wherein the rollover determination module is configured to output the switching signal when the foreseeable roll amount is larger than the predetermined value.

8. The electric power steering apparatus according to Claim 5, wherein the switching module is configured to output the correcting vehicle speed when the switching signal is input thereinto.

# FIG. 1

# FIG. 2

$$R(t) = Tsat1 - Tsat2$$

$$R(t_1) + k\frac{d}{dt}R(t_2 - t_1)$$

$R(t_1)$

ROLL AMOUNT

$t_1$  $t_2$  TIME

FIG. 3

# FIG. 4

```
                    ┌─────────────────┐
                    │      START      │
                    └─────────────────┘
                             │
                             ▼  ◄──────────────────────────┐
   S10 ──────┌──────────────────────────┐                  │
             │        CONTACT b         │                  │
             └──────────────────────────┘                  │
                             │                             │
   S11 ──────┌──────────────────────────┐                  │
             │        INPUT Th, V       │                  │
             └──────────────────────────┘                  │
                             │                             │
   S12 ──┌────────────────────────────────────┐            │
         │   OPERATE A CURRENT COMMAND VALUE   │            │
         └────────────────────────────────────┘            │
                             │                             │
              ◄──────────────┤                             │
              │              ▼                             │
              │  ┌──────────────────────────┐              │
              │  │       DRIVE THE MOTOR     │── S13        │
              │  └──────────────────────────┘              │
              │              │                             │
              │  ┌──────────────────────────┐              │
              │  │        INPUT Im, θ        │── S14        │
              │  └──────────────────────────┘              │
              │              │                             │
              │  ┌──────────────────────────┐              │
              │  │   OPERATE T_SAT1, T_SAT2   │── S15        │
              │  └──────────────────────────┘              │
              │              │                             │
              │  ┌──────────────────────────┐              │
              │  │       OPERATE R(t)        │── S16        │
              │  └──────────────────────────┘              │
              │              │                             │
              │  ┌──────────────────────────┐              │
              │  │      OPERATE f(R(t))      │── S17        │
              │  └──────────────────────────┘              │
              │              │                             │
         S20  │          ◄───┴───►                         │
              │         ╱  f(R(t))  ╲      NO               │
              │        ◄   > Rs?     ►─────────────────────┘
              │         ╲          ╱
              │          ◄───┬───►
              │              │ YES
              │  ┌────────────────────────────────┐
              │  │   OPERATE A VEHICLE SPEED Va    │── S21
              │  └────────────────────────────────┘
              │              │
              │  ┌────────────────────────────────┐
              │  │   SWITCH THE CONTACT "b" TO "a" │── S22
              │  └────────────────────────────────┘
              │              │
              │  ┌────────────────────────────────┐
              │  │  OPERATE A CURRENT COMMAND VALUE│── S23
              │  └────────────────────────────────┘
              │              │
              └──────────────┘
```

# FIG. 5

EP 1 935 758 A2

# FIG. 6

STEERING
TORQUE
VALUE Th

VEHICLE
SPEED V

31
CURRENT
COMMAND
VALUE
OPERATION
UNIT

Iref

32A
+ +

33
CURRENT
LIMITING
UNIT

Irefm

32B
I
+ −

35
PI
CONTROL
UNIT

Vref

36
PWM
CONTROL
UNIT

37
INVERTER
CIRCUIT

38

20
M

Im

CM

341
CONVERGENCE

345
+
+

342
INERTIA

344
+
+

343
SAT

34

EP 1 935 758 A2

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006339788 A
- JP 2004009812 A
- JP 2004203084 A
- JP 2000095132 A